Europäisches Patentamt

European Patent Office

Office européen des brevets

(19)

(11) Numéro de publication : **0 461 044 A1**

(12) **DEMANDE DE BREVET EUROPEEN**

(21) Numéro de dépôt : **91401500.3**

(22) Date de dépôt : **07.06.91**

(51) Int. Cl.⁵ : **G01K 11/06**

(30) Priorité : **08.06.90 FR 9007174**

(43) Date de publication de la demande :
**11.12.91 Bulletin 91/50**

(84) Etats contractants désignés :
**AT BE CH DE DK ES FR GB GR IT LI LU NL SE**

(71) Demandeur : **Brunel, Renaud**
**1, rue La Fontaine**
**F-59650 Villeneuve D'Ascq (FR)**
Demandeur : **Garde, Bernard**
**24, rue des Baladins, Lotissement les**
**Paturelles**
**F-17138 Saint Xandre (FR)**

(72) Inventeur : **Brunel, Renaud**
**1, rue La Fontaine**
**F-59650 Villeneuve D'Ascq (FR)**
Inventeur : **Garde, Bernard**
**24, rue des Baladins, Lotissement les**
**Paturelles**
**F-17138 Saint Xandre (FR)**

(74) Mandataire : **Wagret, Jean-Michel**
**23 rue de Léningrad**
**F-75008 Paris (FR)**

(54) Révélateur de dépassement d'un seuil de température.

(57) — Dispositif de révélation ou révélateur pour le repérage et la signalisation d'une modification intervenue à un stade quelconque dans les conditions de température au cours d'un cycle thermique, par dépassement d'un seuil de température, positive ou négative, autorisé, notamment au cours du stockage de produits alimentaires conservés, et le dispositif révélateur est caractérisé par la combinaison des points suivants :
a) il est constitué d'une enveloppe (4) fermée transparente sur au moins une face,
b) l'enveloppe contient un indicateur notamment coloré (1) choisi pour présenter un point de fusion situé sensiblement au niveau dudit seuil de température,
c) l'enveloppe contient un support d'imprégnation sous forme de feuille (3), apte à absorber ledit indicateur coloré si et lorsqu'il passe à l'état liquide et à changer de couleur suite à cette imprégnation notamment à prendre la couleur de l'indicateur coloré,
d) ladite enveloppe (4) contient ou comporte une feuille de recouvrement opaque et visible extérieurement (5) superposée à la face visible du support d'imprégnation ladite feuille de recouvrement comportant des plages dégagées (6, 6') définissant des fenêtres à travers lesquelles le support d'imprégnation est visible de l'extérieur, et des plages occultant ledit support, de sorte que le changement de couleur du support d'imprégnation après absorption du révélateur, apparaissant uniquement dans lesdites fenêtres et ceci de façon définitive, traduit le changement dans le cycle de température quelles que soient les conditions ultérieures.

FIG. 3

La présente invention concerne un révélateur destiné à permettre de surveiller le maintien d'un produit, au cours d'un processus quelconque, en dessous d'un seuil de température déterminé.

L'invention concerne plus spécialement un tel révélateur susceptible d'être utilisé dans l'industrie alimentaire et dans la distribution de produits conservés par le froid.

On sait que la consommation de préparations alimentaires prêtes à consommer notamment du type surgelé, congelé, ou du type "semi-conserve", se développe considérablement étant donné les avantages qu'elles comportent pour la ménagère et pour le consommateur.

Les circuits de distribution se sont équipés en conséquence et constituent une "chaîne du froid" depuis la fabrication jusqu'au stade de la distribution au détail, de sorte que en principe le produit, tout au long de ses manipulations stockage, déplacements etc.., reste à une température inférieure à la température critique qui est , le plus souvent, un froid négatif pour les produits congelés ou surgelés, ou un froid positif, pour les préparations alimentaires du type plats cuisinés sous vide.

On sait cependant que des accidents peuvent survenir tout au long de la période de transport, stockage etc... de tels produits sans que nécessairement l'évolution défavorable des conditions de température ait été nécessairement décelée.

Et de plus des enquêtes des services administratifs révèlent que les températures réglementaires ne sont pas toujours respectées tant au niveau du stockage qu'au niveau de la distribution.

Le passage du produit alimentaire au dessus du seuil déterminé entraîne des modifications dans les conditions biologiques de la conservation qui aboutissent au développement de germes susceptibles de rendre rapidement le produit impropre à la consommation.

Toutes les ménagères savent, au demeurant, qu'il convient de ne pas recongeler un produit du type surgelé qui a été momentanément décongelé.

On connaît de longue date des dispositifs simples qui, étant insérés ou maintenus au contact immédiat du produit alimentaire congelé, permettent de détecter la survenance accidentelle d'une période de décongélation qui a pu être suivie d'une recongélation.

Ces dispositifs connus sont constitués traditionnellement d'un indicateur coloré choisi pour être à l'état solide en dessous de la température de consigne et pour passer à l'état liquide lorsque cette température est dépassée, l'indicateur coloré étant associé à un support, par exemple un buvard, de telle façon que la liquéfaction de l'indicateur coloré imprègne et colore le buvard qui reste coloré même si le produit retrouve peu après sa température normale de congélation ; il est donc simple et commode dans ces conditions de repérer visuellement par la coloration du support si le produit sous surveillance a subi une opération négative de décongélation momentanée.

Ces dispositifs simples n'ont pas connu la faveur des fabricants car ils présentent des inconvénients.

Il n'est pas commode en premier lieu de manipuler un glaçon au niveau de la fabrication du révélateur ; on a cherché à remédier à cet inconvénient en enfermant ce galçon (généralement eau pigmentée ou colorée) dans une capsule de verre, ce qui permet de manipuler les doses unitaires de révélateurs colorés à l'état liquide. Lorsque le révélateur est mis en fonction, étant inséré dans une enveloppe avec le support d'imprégnation et amené au contact du produit alimentaire, l'abaissement de la température et la dilatation du liquide aqueux provoque la rupture de l'enceinte verrière; ce qui présente l'inconvénient de disperser des débris de verre à proximité d'un produit alimentaire, même si ces débris restent en principe enfermés dans une enveloppe.

Par ailleurs, le signal du passage de température étant constitué d'un simple changement de couleur, peut laisser place à quelques ambiguïtés susceptibles de dérouter le consommateur.

Il apparaît donc souhaitable de pouvoir exprimer en clair le message d'avertissement informant le consommateur potentiel de ce que le produit est en fait périmé ou impropre à la consommation étant donné le défaut qu'il présente dans son cycle thermique de conservation.

Et surtout il apparaît avantageux de pouvoir doubler le signal négatif d'avertissement en cas de péremption du produit, d'un signal positif confirmant au contraire la bonne qualité du produit propre à la consommation.

Il est donc souhaitable que le révélateur puisse exprimer un message largement convivial en encourageant l'achat du produit sain, ce message positif étant, lors du virage par passage au dessus de la température critique, détruit automatiquement pour faire apparaître le message de mise en garde ; ces messages doivent être dépourvus d'ambiguïté étant de préférence exprimés en un langage universel permettant des facilités de communication et de standardisation dans les conditionnements.

L'invention répond à ces divers objectifs ainsi qu'on le verra tout au long du présent mémoire descriptif.

La présente invention concerne un dispositif de révélation ou révélateur pour le repérage et la signalisation d'une modification intervenue à un stade quelconque dans les conditions de température au cours d'un cycle thermique, par dépassement d'un seuil de température, positive ou négative, autorisé, notamment au cours du stockage de produits alimentaires conservés, et le dispositif révélateur est du type constitué d'une enveloppe fermée, transparente sur au moins une face, et contenant d'une part un indicateur coloré et à l'état solide et choisi pour présenter un point de fusion situé sensiblement au niveau dudit seuil de température, et le dispositif révélateur comporte d'autre part un support d'imprégnation notamment sous forme de feuille, apte à absorber ledit indicateur coloré si et lorsqu'il passe à l'état liquide et à être ainsi lui-même coloré par ledit indicateur, et ce dispositif révélateur est caractérisé en ce que ladite enveloppe comporte une feuille de recouvrement superposée à la face visible du support d'imprégnation ladite feuille comportant des solutions de continuité ou plages dégagées ou transparentes définissant des fenêtres, solutions de continuité ou ouvertures à travers lesquelles le support d'imprégnation est visible de l'extérieur, ces plages dégagées se détachant du fond opaque de ladite feuille de recouvrement.

Selon une forme de réalisation plus particulière, ladite feuille de recouvrement peut être solidarisée sur la paroi de ladite enveloppe, ou faire corps avec elle.

En variante, la feuille de recouvrement pourvue de fenêtres ou solutions de continuité peut être constituée par la paroi de ladite enveloppe, visible de l'extérieur et comportant des plages opaques, alternant avec des plages transparentes ou translucides, le support d'imprégnation n'étant pas visible de l'extérieur dans les parties opaques de ladite feuille de recouvrement et étant visible de l'extérieur à travers les fenêtres ou plages transparentes de ladite feuille.

De préférence la feuille de recouvrement est prévue de la même couleur que le support d'imprégnation à l'état vierge, de sorte que l'ensemble constitué par le support d'imprégnation et la feuille de recouvrement forme une plage unique monochrome dans laquelle les fenêtres ou solutions de continuité de la feuille de recouvrement n'apparaissent pas, tandis que l'indicateur coloré ayant modifié la couleur du support d'imprégnation, en cas de fusion de ce support coloré, le support d'imprégnation est alors rendu apte à apparaître par contraste dans les fenêtres ou plages transparentes disposées sur la feuille de recouvrement.

Selon une réalisation plus particulière, les fenêtres, solutions de continuité ou plages transparentes prévues sur la feuille de recouvrement définissent un message en clair alfanumérique.

Selon une variante, les fenêtres, solutions de continuité ou plages transparentes prévues sur la feuille de recouvrement forment une image figurative de préférence symbolique d'un passage à une température supérieure au seuil de température autorisé.

Selon une variante, la feuille de recouvrement est prévue avec une coloration identique à celle du support d'imprégnation après absorption de l'indicateur coloré passé à l'état liquide, de sorte que les fenêtres, solutions de continuité ou plages transparentes apparaissent visibles par contraste de couleur sur le support d'imprégnation à l'état vierge, ladite feuille de recouvrement exprimant alors un message lisible lorsque le support d'imprégnation resté vierge a conservé sa couleur d'origine, et par contre les fenêtres disposées sur la feuille de recouvrement ne sont plus lisibles et cessent d'exprimer un message après absorption de l'indicateur coloré passé à l'état liquide par le support d'imprégnation, les couleurs respectivement dudit support d'imprégnation devenu coloré et de la feuille de recouvrement étant alors identiques.

Selon un développement plus particulier de l'invention, la feuille de recouvrement comporte elle-même deux parties, soit une première partie telle que précédemment décrite et dont le fond opaque correspond à la couleur du support d'imprégnation après absorption de l'indicateur coloré, tandis que la seconde partie comporte un fond de couleur identique au support d'imprégnation à l'état vierge, de sorte que avant et en l'absence d'absorption de l'indicateur coloré par le support d'imprégnation, le message ou la représentation virtuelle constitués par les fenêtres ou solutions de continuité de la feuille de recouvrement ne sont pas visibles dans la seconde partie de ladite feuille (dont le fond est de couleur identique au support d'imprégnation vierge), tandis que les messages constitués par les fenêtres, solutions de continuité ou plages dégagées ou transparentes sur la première partie de la feuille de recouvrement apparaissent par contraste, la couleur de la feuille de recouvrement dans cette première partie étant contrastée par rapport à la couleur du support d'imprégnation apparaissant dans lesdites fenêtres, ou solutions de continuité tandis que après absorption de l'indicateur coloré par le support d'imprégnation, ce dernier devient de la même couleur que le fond de la feuille de recouvrement dans ladite première partie, les fenêtres ou solutions de continuité et les messages d'approbation ou de validation représentés par ces fenêtres ou solutions de continuité étant alors occultés, tandis que le support d'imprégnation devenu coloré apparaît par contraste dans les fenêtres de la seconde partie dont le message de recommandation d'abstention ou les représentations correspondantes se trouvent ainsi rendus visibles.

Selon une forme plus avantageuse de réalisation, l'enveloppe a la forme d'une languette longiforme contenant l'indicateur coloré à l'état solide à une extrémité et la languette comporte un resserrement pour maintenir en place une capsule contenant l'indicateur coloré.

Et plus spécialement cette enveloppe comporte une face, opposée à la face de lecture dans laquelle la feuille de recouvrement est visible, pourvue de moyens de solidarisation tels qu'une couche d'adhésif, éventuellement protégée par une contre-feuille en vue d'assurer la solidarisation de ladite languette sur un support et en vue d'assurer le collage de cette languette sur la paroi extérieure d'un produit emballé.

Selon une variante, l'enveloppe comporte une couche d'adhésif transparent disposée sur la face correspondante à la face de lecture et par laquelle la feuille de recouvrement est visible, la languette étant alors prévue pour son collage sur la paroi intérieure d'une feuille d'emballage transparent du produit alimentaire.

L'invention concerne encore un produit alimentaire notamment du type congelé ou surgelé et conditionné dans un emballage constitué d'un boitage souple ou rigide et comportant un révélateur de dépassement d'un seuil de température tel que précédemment spécifié, et le produit alimentaire conditionné est caractérisé en ce que le boitage comporte une fente de largeur nécessaire pour permettre l'insertion de l'enveloppe sous forme de languette longiforme et en ce que l'extrémité de ladite enveloppe en forme de languette, contenant l'indicateur coloré, est insérée à l'intérieur du boitage tandis que le corps de la languette déborde à l'extérieur ayant traversé ledit passage en apparaissant ainsi sur une face du boitage.

Notamment l'enveloppe en forme de languette est rabattue dans sa partie extérieure débordante au delà dudit passage et elle est solidarisée par collage contre la paroi dudit boitage.

L'invention concerne également un procédé de fabrication d'un révélateur selon les spécifications ci-dessus et comportant un indicateur coloré du type apte à se dilater lors du passage de l'état liquide à l'état solide, notamment de nature aqueuse, et cet indicateur coloré à l'état liquide est inséré dans une capsule en matière synthétique comportant au moins une ligne de faiblesse constituant une amorce de rupture, cette capsule étant positionnée dans l'enveloppe à la température de liquéfaction de l'indicateur coloré, conjointement avec le support d'imprégnation dont il est isolé par la paroi de la capsule fermée, l'enveloppe une fois refermée étant associée au produit notamment alimentaire à surveiller et amenée à une température négative provoquant alors le passage à l'état solide de l'indicateur coloré et par suite de sa dilatation la rupture des parois de la capsule au niveau desdites lignes de faiblesse, l'indicateur coloré, cependant alors à l'état solide, étant ainsi à proximité et au contact du support d'imprégnation.

L'invention concerne également le révélateur tel que obtenu par le procédé ci-dessus et dans lequel l'indicateur coloré à l'état solide a été rendu disponible et amené au contact du support d'imprégnation par rupture de sa capsule de rétention initiale.

L'invention concerne également selon une nouvelle variante un révélateur dans lequel le support d'imprégnation est associé sur chacune de ces faces à une feuille de recouvrement, le révélateur étant ainsi lisible indifféremment par une face ou par une autre.

D'autres caractéristiques et avantages de l'invention ressortiront de la description qui suit et qui est donnée en rapport avec quelques formes de réalisation de l'invention présentées à titre d'exemples non limitatifs.

La Figure 1 représente une vue éclatée du révélateur de l'invention avec ses divers éléments composants.

La Figure 2a représente le révélateur de l'invention une fois monté et avant sa mise en place en association avec un produit alimentaire mis ainsi sous surveillance.

La Figure 2b représente le révélateur de l'invention mis en situation et dans l'hypothèse où l'indicateur coloré a été soumis à liquéfaction en faisant apparaître le message d'avertissement.

La Figure 3a représente le révélateur de l'invention supposé en place et au contact d'un produit alimentaire maintenu à sa température de congélation et sans faille.

La Figure 3b représente le révélateur de la Figure 3 après passage au dessus de la température critique et après liquéfaction de l'indicateur coloré.

La Figure 4 représente une vue du montage du révélateur de l'invention en situation sur un boitage d'un produit alimentaire conditionné notamment dans une boite en carton.

La Figure 5 représente le révélateur de l'invention mis en place à l'intérieur d'un conditionnement transparent de produit alimentaire.

La Figure 6a représente une variante d'une feuille de recouvrement comportant deux messages alternés, la Figure 6a représentant la feuille dans le cas où le seuil de température a été respecté et n'a pas été dépassé.

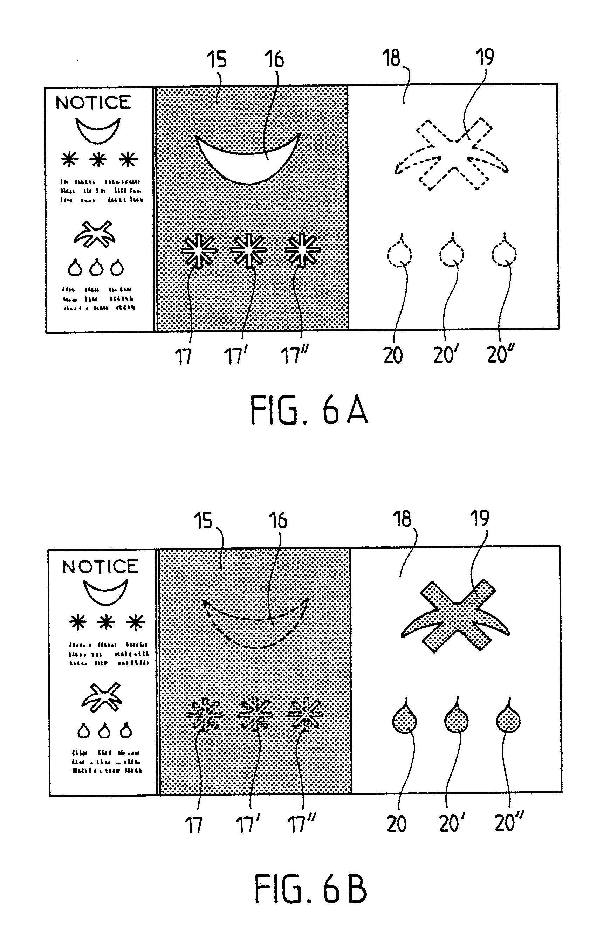

Tandis que la Figure 6b représente la feuille de recouvrement apparaissant au niveau du révélateur dans le cas où le seuil de température a été dépassé.

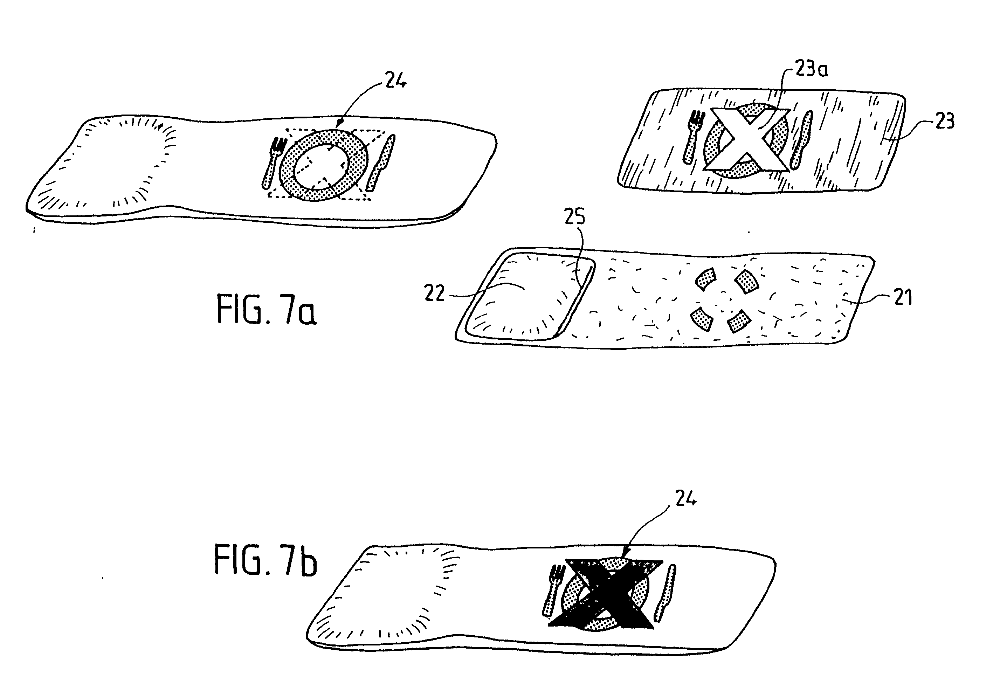

Les Figures 7a et 7b représentent une variante respectivement avant écoulement et après écoulement et imprégnation par le révélateur coloré.

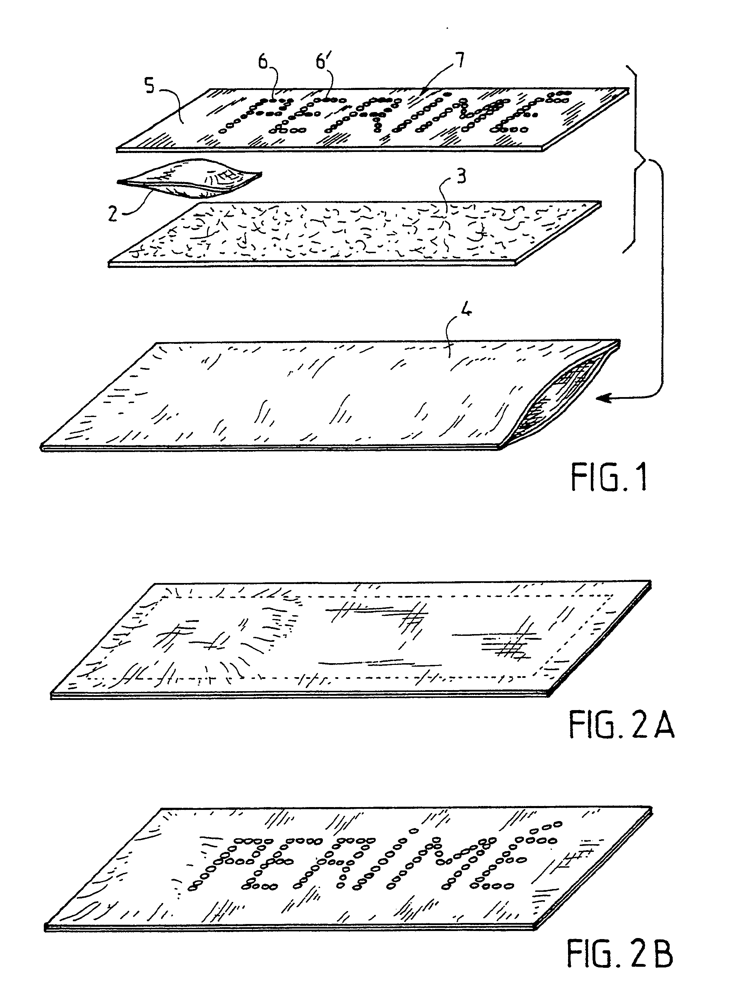

Selon l'ensemble des Figures, on voit que notamment à partir de la Figure 1 le révélateur est constitué, de façon connue en soi, d'une réserve d'un indicateur coloré 1 contenu dans la capsule 2 associé à un support d'imprégnation 3 le tout étant apte à être inséré dans une enveloppe de préférence transparente 4.

Selon l'innovation de l'invention, l'ensemble est associé à une feuille de recouvrement 5 qui peut être positionnée d'un côté ou de l'autre de l'ensemble précédent.

Et selon une variante (non représentée) une même feuille de recouvrement 5 peut être positionnée de part et d'autre du support d'imprégnation 3.

La feuille de recouvrement 5 comporte de préférence des ouvertures, perforations, solutions de continuité qui visent à exprimer un message soit en clair soit sous forme figurative (pictogramme).

Dans l'exemple de la Figure 1 on voit que les évidements ou perforations 6, 6', 7, 7' représentent ensemble des lettres qui expriment un mot.

De préférence ce mot pourra être choisi selon toute langue convenable pour exprimer un message négatif d'avertissement 7.

La feuille de recouvrement 5 est prévue avec une couleur identique, par exemple une couleur neutre (de préférence le blanc), au fond de la feuille constituant le support d'imprégnation 3.

De sorte que la superposition de la feuille de recouvrement 5 sur le support d'imprégnation 3 ne laisse apparaître aucun élément visible par suite de la monochromie de l'ensemble.

Eventuellement et pour faire disparaître la lisibilité (bien que faible) éventuelle des ouvertures ou perforations 6, 6' la paroi de l'enveloppe extérieure 4, tout en restant largement transparente, pourrait être rendue légèrement laiteuse de façon à uniformiser l'aspect de la feuille de recouvrement 5.

Dans ces conditions, au départ, l'enveloppe apparaît telle qu'on la voit à la Figure 2a, c'est-à-dire que le message 7 reste pratiquement invisible à travers la paroi de l'enveloppe 4.

Si et lorsque l'ensemble dépasse le seuil de température de consigne, qui correspond à la température de liquéfaction et de fusion de l'indicateur 1, ce dernier passant à l'état liquide se répand sur l'ensemble du support d'imprégnation 3 constitué par exemple d'une bande de papier buvard.

L'indicateur fortement coloré imprègne alors le buvard et le rend par conséquent fortement coloré.

Et dans ces conditions le buvard, par exemple rouge, vert, marron etc..., devient nettement visible à travers les évidements et perforations 6 et 6' de la feuille de recouvrement 5 en faisant donc apparaître et en rendant parfaitement lisible le message 7 contenu virtuellement et en réserve sur la feuille de recouvrement 5.

Dès lors le message de péremption devient clairement exprimé et restera figé dans cette situation quand bien même le produit retrouverait, à un moment quelconque notamment au moment de l'achat, sa température de congélation.

De sorte que le produit ayant dépassé le seuil de température de consigne sera marqué de façon indélébile et définitive en assurant ainsi la sauvagarde du consommateur.

Selon un développement de l'invention qui concerne la fabrication de l'enveloppe constituant le révélateur, le liquide coloré 1 est enfermé dans une capsule 2 constituée d'un matériau de synthèse convenablement choisi.

On peut utiliser pour cette fabrication les techniques connues pour la production de berlingots...

Le tube en matière synthétique, rempli du liquide destiné à être encapsulé, est soumis à des soudures transversales à intervalles réguliers en définissant ainsi des capacités formant chacune une capsule.

Chaque capsule est en outre pourvue, au stade de sa fabrication, d'une ligne de faiblesse définissant une amorce de rupture.

Lorsque la capsule insérée dans son enveloppe avec les autres éléments composants (feuille d'imprégnation et feuille de recouvrement) est amenée à une température de froid négatif, la congélation du liquide entraîne alors par suite de la dilatation la rupture de la capsule au niveau de cette amorce de rupture.

Ainsi l'indicateur coloré, qui était isolé par la paroi de la capsule du support d'imprégnation, est amené au contact virtuel et en communication avec ce dernier alors que, étant devenu solide, il ne risque pas de provoquer l'imprégnation du support constitué par exemple d'une languette de buvard.

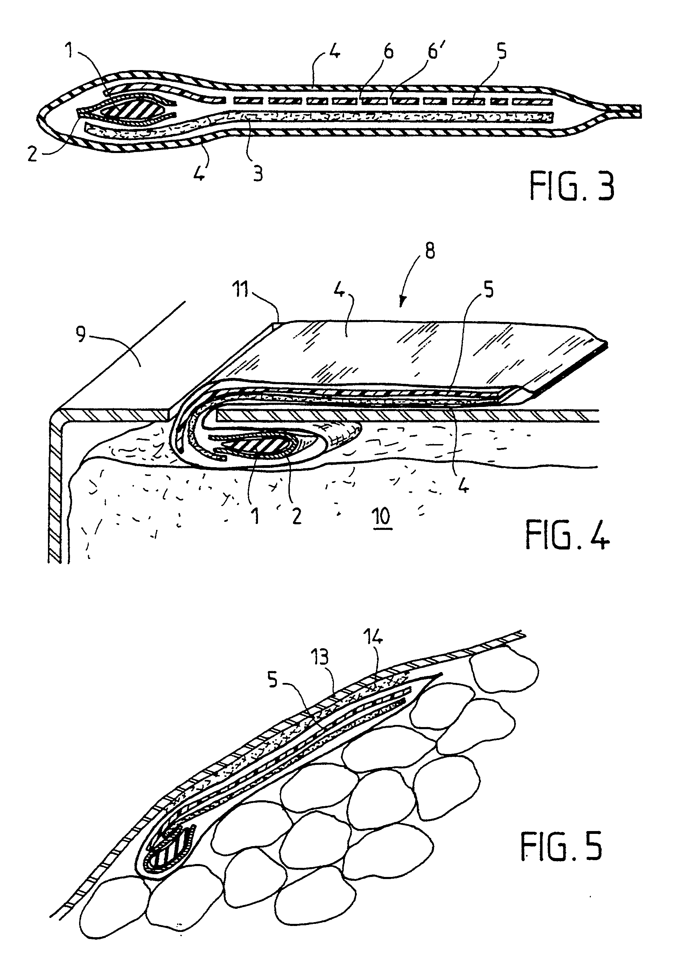

Selon encore un autre développement qui est illustré plus spécialement à la Figure 4 on voit que le révélateur 8 constitué comme précédemment décrit de l'enveloppe 4, de la feuille de recouvrement 5 et du support d'imprégnation 3 ainsi que de la capsule 2 contenant l'indicateur coloré 1 est associé à un boitage 9 contenant un produit alimentaire 10.

Et de préférence, l'extrémité du révélateur 8 en forme de languette qui comporte la capsule 2 et l'indicateur coloré 1 est insérée à l'intérieur du boitage 9 tandis que le corps de la languette déborde à l'extérieur en traversant le passage 11 pratiqué dans le boitage 9.

Ce passage 11 pourrait être constitué par exemple du bord d'un des flancs de la boite refermé sur le côté et permettant ainsi entre le rabat et le bord correspondant l'insertion de la languette 8, l'ensemble étant ainsi aisément mis en place au niveau du conditionnement.

De préférence, la face apparente du révélateur 8 correspond à la face qui comporte la feuille de recouvrement 5, comme on le voit sur la Figure 4, tandis que la face opposée est collée et solidarisée sur la paroi du boitage 9.

Dans ce cas, le révélateur peut avantageusement recevoir au départ et au niveau de la fabrication, sur la face de l'enveloppe opposée à la face visible (par laquelle apparaît la feuille de recouvrement 5), un revêtement adhésif éventuellement protégé par une contre-feuille qui permettra ainsi de faciliter la mise en place et l'association du révélateur sur le boitage du produit alimentaire.

Dans une variante qui est représentée à la Figure 5, c'est la paroi supérieure du révélateur qui surplombe la feuille de recouvrement 5 qui est pourvue d'une couche d'adhésif ; ceci permet d'insérer le révélateur 8 derrière la feuille transparente 12 qui constitue l'enveloppe d'un produit alimentaire.

Dans ce cas, la couche d'adhésif 13 est elle-même transparente ou elle est disposée sur le pourtour de l'enveloppe de façon à ne pas entraver la visibilité du message virtuel 7 inscrit sur la feuille de recouvrement 5.

Dans les exemples de réalisations illustrés aux Figures 6a et 6b, la feuille de recouvrement (ici représentée seule mais qui est en réalité insérée dans l'enveloppe de protection 4) comporte deux parties.

Une première partie 15 comporte un message positif validant la qualité du produit ; par exemple ce message est imprimé sous forme d'un pictogramme et il s'inscrit par des perforations ou évidements respectivement 16, 17, 17', 17".

Dans l'exemple illustré, le message de validation vise à exprimer une bouche ouverte et souriante dans sa partie supérieure et trois cristaux de neige dans la partie inférieure montrant que le produit a été maintenu à l'état congelé et qu'il est propre à la consommation.

Dans cette première partie 15, le fond de la feuille de recouvrement est de couleur identique par exemple rouge à l'indicateur coloré, en principe à l'état solide et en attente.

De sorte que, au départ, à travers les ouvertures 16, 17, 17', 17" apparaît le support d'imprégnation 3 lui-même d'une couleur différente de l'indicateur coloré par exemple en blanc.

Dans le cas où l'indicateur coloré est de l'eau associée à un pigment rouge, le fond de la feuille 15 apparaîtra ainsi en rouge tandis que les ouvertures 16, 17, 17', 17" apparaîtront de la couleur du buvard d'imprégnation 3 c'est-à-dire en blanc ; ainsi les messages exprimés par la feuille 15 dans un premier temps seront visibles en blanc sur le fond 15, comme on le voit sur la Figure 6a.

La partie voisine et symétrique 18 de la feuille de recouvrement comporte des messages en principe opposés ; par exemple elle comporte un évidement supérieur 19 sur lequel une bouche désappointée est apposée et une croix (exprimant une négation) tandis qu'en position inférieure sont représentées trois gouttes 20, 20', 20" , l'ensemble de ces représentations étant figuré par des évidements dans la feuille de recouvrement en sa partie 18.

Ces messages, virtuellement inscrits dans la feuille de recouvrement dans la partie 18, visent à exprimer le caractère non consommable du produit qui a été ramené à une température supérieure à la température fixée comme consigne.

Cette seconde partie 18 sera d'une coloration identique à la coloration de départ du buvard constituant le support d'imprégnation 3, par exemple simplement blanc.

On voit ainsi que dans un premier temps et tant que le produit reste en dessous de sa température de consigne, la partie 15 de la feuille de recouvrement fait apparaître par contraste le message pictographique exprimé par les évidements 16, 17, 17', 17" qui apparaissent en blanc (feuille d'imprégnation arrière 3) restée blanche et constrastant avec le fond rouge de la partie 15.

Si le produit dépasse la température de consigne correspondant à la liquéfaction de l'indicateur coloré ; ce dernier, constitué par hypothèse d'une eau colorée en rouge se répand sur le buvard constituant la feuille ou support d'imprégnation 3, lequel devient par conséquent totalement rouge, du même rouge que le fond de la première partie 15 de la feuille de recouvrement.

Ainsi les fenêtres 16, 17, 17' feront apparaître sur un fond rouge une réserve constituée du buvard arrière également rouge, de sorte que le contraste disparaît et le message de validation exprimé par la première partie 15 est annulé.

A l'inverse sur le fond blanc de la seconde partie 18, les réserves 19, 20, 20', 20" deviennent alors rouge en contrastant par rapport au fond blanc de cette seconde partie.

Ainsi parallèlement à la disparition du message de validation exprimé par la partie 15, devient visible et fortement apparant le message négatif de mise en garde exprimé par la partie 18 de la feuille de recouvrement.

Dans ces conditions on apporte aux consommateurs une double sécurité.

On ne se contente plus d'une absence de message négatif qui consiste à ne pas signaler d'anomalies ; le révélateur confirme au contraire le bon état de la marchandise.

Et au cas où une avarie se produit, automatiquement et dans le même temps le message de bon état se trouve infirmé et disparaît tandis qu'est affiché le message contraire de mise en garde.

On apporte ainsi une parfaite sécurité aux consommateurs en même temps qu'une fiabilité totale du système.

On comprend en effet que reposant sur le principe physique du passage de l'état solide à l'état liquide, le système exclut toute tentative ou risque de fraude.

Il évite tout danger d'une quelconque altération du produit par des débris de verre et il rassure par son expression en clair, tant du message positif qu'éventuellement d'un message négatif, le consommateur et le candidat acheteur.

Les Figures 7a et 7b montrent une dernière variante de réalisation.

Selon la Figure 7a, on montre d'une part l'ensemble de la languette constituant l'indicateur de l'invention dans sa présentation globale, tandis que en dessous sont montrés d'une part le support d'imprégnation 21, associé à la capsule 22 contenant l'indicateur coloré, et au dessus la feuille de recouvrement 23 qui vient se superposer au buvard d'imprégnation 21.

Le buvard d'imprégnation ou feuille d'imprégnation 21, associé à la capsule 22 et à la feuille de recouvrement 23, sont enfermés dans une enveloppe extérieure pour conformer la languette de la partie supérieure de la Figure 7a.

La feuille de recouvrement 23 comporte comme indiqué précédemment une fenêtre ou partie dégagée 23a qui a ici la forme caractéristique d'une croix de Saint-André ou d'un X symbolisant une négation.

Selon cette forme de réalisation, l'ensemble formé par la feuille de recouvrement 23 et le support d'imprégnation inférieur 21 sont soumis ensemble à une impression dans la zone de la fenêtre 23a ; cette impression visible globalement sur la partie supérieure de la Figure 7a montre ici un couvert (assiette centrale avec fourchette et couteau disposés latéralement) symbolisant la consommation d'un produit alimentaire.

On peut également représenter dans le centre de l'assiette un plat ou un produit alimentaire particulier.

L'ensemble de cette impression 24 est donc reporté d'une part sur la feuille de recouvrement 23 mais également sur la feuille d'imprégnation inférieure 21, à travers la fenêtre 23a pour conformer ainsi ensemble la figure ou la vignette constituant un pictogramme compréhensible directement 24.

Comme la feuille de recouvrement 23 est d'une couleur claire, identique à la feuille inférieure d'imprégnation 21, la fenêtre 23a c'est-à-dire la forme du X n'apparaît pas à l'oeil, elle est au contraire noyée dans la continuité de la vignette du pictogramme 24.

Par contre si le support d'imprégnation vient à être coloré fortement par suite de l'écoulement du révélateur coloré contenu dans la capsule 22 (s'écoulant notamment à travers la fente 25) l'ensemble du buvard ou support d'imprégnation 21 va devenir fortement coloré et dès lors ce buvard va apparaître en contraste, comme on le voit sur la Figure 7d à travers la fenêtre 23a ; ainsi va se superposer sur la représentation ou pictogramme 24 un X symbolisant la négation du pictogramme précédent, c'est-à-dire une mise en garde très claire invitant à la non consommation du produit.

Les impressions 24 portées sur la feuille de recouvrement pourraient être imprimées directement sur la face visible de l'enveloppe comportant alors une fenêtre transparente en forme de X ; la face visible de l'enveloppe jouant alors le rôle de feuille de recouvrement comme on l'a précédemment exposé.

Selon une autre caractéristique de l'invention, on peut prévoir que l'ensemble formé par la feuille d'imprégnation 21, la feuille supérieure de recouvrement et la capsule 22 peut être assemblé et enfermé dans une enveloppe par simple passage de cet ensemble associé dans un bain d'un produit d'enduction ou de recouvrement approprié éventuellement en solution suivi d'un séchage, en assurant ainsi le dépôt d'un film continu formant enveloppe sur les trois éléments assemblés.

On précisera que les formules: "fenêtre", "solution de continuité", "évidement", "plages dégagées" utilisées dans le corps du mémoire descriptif et des revendications qui suivent désignent des zones de la feuille de recouvrement (constituée éventuellement d'une face de l'enveloppe elle-même) par lesquelles, ou à travers lesquelles la feuille d'imprégnation (buvard) est visible, alors que la feuille de recouvrement occulte la feuille d'imprégnation en dehors desdites zones.

## Revendications

1 - Dispositif de révélation ou révélateur pour le repérage et la signalisation d'une modification intervenue à un stade quelconque dans les conditions de température au cours d'un cycle thermique, par dépassement d'un seuil de température, positive ou négative, autorisé, notamment au cours du stockage de produits alimentaires conservés, et le dispositif révélateur est caractérisé par la combinaison des points suivants :

a) il est constitué d'une enveloppe (4) fermée transparente sur au moins une face,

b) l'enveloppe contient un indicateur notamment coloré (1) choisi pour présenter un point de fusion situé sensiblement au niveau dudit seuil de température,

c) l'enveloppe contient un support d'imprégnation sous forme de feuille (3), apte à absorber ledit indicateur coloré si et lorsqu'il passe à l'état liquide et à changer de couleur suite à cette imprégnation notamment à prendre la couleur de l'indicateur coloré,

d) ladite enveloppe (4) contient ou comporte une feuille de recouvrement opaque et visible extérieurement (5) superposée à la face visible du support d'imprégnation ladite feuille de recouvrement comportant des plages dégagées (6, 6') définissant des fenêtres à travers lesquelles le support d'imprégnation est visible de l'extérieur, et des plages occultant ledit support, de sorte que le changement de couleur du support d'imprégnation après absorption du révélateur, apparaissant uniquement dans lesdites fenêtres et ceci de façon définitive, traduit le changement dans le cycle de température quelles que soient les conditions ultérieures.

2 - Dispositif selon la revendication 1, et caractérisé en ce que la feuille de recouvrement (5) pourvue de plages dégagées (6, 6') formant fenêtres est constituée par au moins une paroi même de ladite enveloppe (4), visible de l'extérieur et comportant venue d'impression une ou plusieurs plages opaques, alternant avec une ou plusieurs plages translucides ou transparentes, le support d'imprégnation n'étant pas visible de l'extérieur dans les parties opaques de ladite feuille de recouvrement et étant visible de l'extérieur à travers les plages translucides ou transparentes de ladite feuille.

3 - Dispositif selon l'une des revendications 1 ou 2, caractérisé en ce que la feuille de recouvrement (5) est prévue de la même couleur notamment blanche que le support d'imprégnation (3) à l'état vierge, de sorte que l'ensemble constitué par le support d'imprégnation et la feuille de recouvrement forme une plage unique monochrome notamment blanche dans laquelle les fenêtres ou plages dégagées de la feuille de recouvrement ne se distinguent pas, tandis que si l'indicateur notamment coloré (1) a modifié la couleur du support d'imprégnation (3), en cas de fusion de l'indicateur, le support d'imprégnation est alors rendu apte à apparaître par contraste dans les fenêtres disposées sur la feuille de recouvrement.

4 - Dispositif selon l'une des revendications 1, 2 ou 3, caractérisé en ce que les fenêtres ou plages dégagées prévues sur la feuille de recouvrement définissent un message en clair alfa-numérique.

5 - Dispositif selon l'une des revendications 1, 2 ou 3, caractérisé en ce que les fenêtres ou plages dégagées prévues sur la feuille de recouvrement forment une image figurative de préférence sous forme de pictogramme et notamment symbolique d'un passage à une température supérieure au seuil de température autorisé, ou d'une recommandation d'abstentation.

6 - Dispositif selon l'une des revendications 1 ou 2, caractérisé en ce que la feuille de recouvrement (15) est prévue dans sa partie opaque avec une coloration identique à celle du support d'imprégnation (3) après absorption de l'indicateur notamment coloré (1) passé à l'état liquide, de sorte que les fenêtres (16, 17) ou plages dégagées apparaissent visibles par contraste de couleur sur le support d'imprégnation à l'état vierge, lesdites fenêtres exprimant alors un message d'approbation lisible lorsque le support d'imprégnation resté vierge a conservé sa couleur d'origine, et par contre ces fenêtres (16, 17) disposées sur la feuille de recouvrement (15) ne se distinguent plus du fond et cessent d'exprimer ce message d'approbation après absorption de l'indicateur notamment coloré (passé à l'état liquide) par le support d'imprégnation, les couleurs respectivement dudit support d'imprégnation devenu coloré et de la feuille de recouvrement étant alors identiques.

7 - Dispositif selon l'une des revendications 1 à 6, caractérisé en ce que la feuille de recouvrement comporte elle-même deux parties, soit une première partie (15) dont le fond opaque correspond à la couleur du support d'imprégnation (3) après absorption de l'indicateur notamment coloré (1), tandis que la seconde partie (18) comporte un fond opaque de couleur identique au support d'imprégnation (3) à l'état vierge, de sorte que avant et en l'absence d'absorption de l'indicateur coloré (1) par le support d'imprégnation (3), un message d'abstention constitué par des fenêtres (19, 20, 20') de la feuille de recouvrement ne sont pas visibles dans la seconde partie (18) de ladite feuille (dont le fond est de couleur identique au support d'imprégnation vierge), tandis que le message d'approbation ou de validation constitué par les fenêtres ou plages dégagées (16, 17, 17') sur la première partie (15) de la feuille de recouvrement apparaissent par contraste, la couleur de la feuille de recouvrement dans cette première partie étant contrastée par rapport à la couleur du support d'imprégnation (3) apparaissant dans lesdites fenêtres, tandis que après absorption de l'indicateur coloré par le support d'imprégnation, ce dernier devient de la même couleur que le fond de la feuille de recouvrement dans ladite première partie (15), les fenêtres (16, 17, 17') et les messages d'approbation représentés par ces fenêtres ou évidements étant alors invisibles, tandis que le support d'imprégnation (3) devenu coloré apparaît par contraste dans les fenêtres (19, 20, 20') de la seconde partie dont le message d'abstention ou mise en garde ou les représentations correspondantes se trouvent ainsi rendus visibles.

8 - Dispositif selon l'une des revendications 1 à 7, caractérisé en ce que l'enveloppe (4) a la forme d'une languette longiforme contenant l'indicateur notamment coloré à l'état solide à une extrémité, et elle comporte un resserrement sur deux bords parallèles assurant le maintien en place de la capsule contenant ledit indicateur coloré.

9 - Dispositif selon l'une des revendications 1 à 8, et caractérisé en ce que l'enveloppe (4) comporte une face, opposée à la face de lecture dans laquelle la feuille de recouvrement (5) est visible, pourvue de moyens de solidarisation tels qu'une couche d'adhésif, éventuellement protégée par une contre-feuille en vue d'assurer la solidarisation de ladite languette sur un support et en vue d'assurer le collage de cette languette sur la paroi extérieure d'un produit emballé.

10 - Dispositif selon l'une des revendications 1 à 9, et caractérisé en ce que l'enveloppe (4) comporte une couche d'adhésif transparent disposée sur la face correspondante à la face de lecture et par laquelle la feuille de recouvrement est visible, la languette étant alors prévue pour son collage sur la paroi intérieure d'une feuille d'emballage transparent du produit alimentaire.

11 - Dispositif selon l'une des revendications 9 ou 10, et destiné à être associé à un produit alimentaire notamment du type congelé ou surgelé et conditionné dans un emballage souple lequel comporte une fente ou passage (11) de largeur appropriée et caractérisé en ce que l'enveloppe (4) est conformée sous forme de languette longiforme et en ce que l'extrémité de ladite enveloppe en forme de languette, contenant l'indicateur coloré, est insérée à l'intérieur de l'emballage tandis que le corps de la languette déborde à l'extérieur ayant traversé ledit passage en apparaissant ainsi sur une face extérieure de l'emballage, étant éventuellement solidarisée par collage sur cette face.

**12** - Procédé de fabrication d'un révélateur conforme à l'une des revendications 1 à 11 ci-dessus et comportant un indicateur notamment coloré (1) du type apte à se dilater lors du passage de l'état liquide à l'état solide, notamment de nature aqueuse, et cet indicateur coloré à l'état liquide est inséré dans une capsule (2) en matière synthétique non élastiquement déformable comportant au moins une ligne de faiblesse constituant une amorce de rupture, cette capsule étant positionnée dans l'enveloppe (4) à la température de liquéfaction de l'indicateur, conjointement avec le support d'imprégnation dont il est isolé par la paroi de la capsule fermée, l'enveloppe une fois refermée étant associée au produit notamment alimentaire à surveiller et amenée à une température négative provoquant alors le passage à l'état solide de l'indicateur coloré et par suite de sa dilatation la rupture des parois de la capsule au niveau desdites lignes de faiblesse, l'indicateur coloré, cependant alors à l'état solide, étant ainsi à proximité et au contact du support d'imprégnation.

**13** - Révélateur selon l'une des revendications 1 à 12, et caractérisé en ce que le support d'imprégnation est associé sur chacune de ces faces à une feuille de recouvrement, éventuellement constitué par chaque face de l'enveloppe elle-même, le révélateur étant ainsi lisible indifféremment par une face ou par une autre.

**14** - Révélateur selon l'une des revendications 1 à 13 ci-dessus, caractérisé en outre en ce que le support d'imprégnation 21 et la feuille de recouvrement supérieure 23 sont d'une même couleur de préférence claire et plus spécialement blanche, la feuille de recouvrement 23 comportant au moins une fenêtre 23a formée d'un évidement faisant apparaître le support d'imprégnation arrière, la feuille de recouvrement et la feuille d'imprégnation comportant dans la zone de cet évidement 23a un message pré-imprimé constituant une représentation ou une inscription d'approbation ou de validation se prolongeant notamment depuis un bord de ladite fenêtre 23a sur le support d'imprégnation puis reprenant sur le bord opposé de ladite fenêtre, et la fenêtre a une forme propre à symboliser une annulation du message de validation pré-imprimé, cette fenêtre restant neutre et confondue avec le fond monochrome de l'ensemble, mais étant susceptible d'apparaître avec un fort contraste lors de l'imprégnation du support 21 par l'indicateur coloré déversé depuis la capsule 22.

**15** - Révélateur selon la revendication 14 précédante, caractérisé en ce que la fenêtre a la forme d'un X ou croix de Saint-André symbolisant une annulation du message en clair ou pictographique d'approbation pré-imprimé.

**16** - Révélateur selon l'une des revendications 1 à 15 ci-dessus, caractérisé en ce que l'enveloppe extérieure est obtenue par immersion de l'ensemble constitué du support d'imprégnation, de la feuille de recouvrement et de la capsule contenant l'indicateur coloré dans un bain d'un produit approprié en solution à un degré de viscosité approprié et suivi d'un séchage rapide.

FIG.1

FIG. 2 A

FIG. 2 B

FIG. 3

FIG. 4

FIG. 5

**FIG. 6 A**

**FIG. 6 B**

FIG. 7a

FIG. 7b

EP 0 461 044 A1

Office européen
des brevets

RAPPORT DE RECHERCHE EUROPEENNE

Numero de la demande

EP 91 40 1500

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 632 405 (A. SORGE)<br>* Page 2, ligne 20; page 4, ligne 21 - page 5, ligne 28; page 8, lignes 8-11,20-29; fig. * | 1,3,5,8 -11 | G 01 K 11/06 |
| A | US-A-4 563 973 (D.P. STULL)<br>* En entier * | 3,4,9 | |
| A | US-A-4 327 117 (R.D. LENACK)<br>* En entier * | 6,7 | |
| A | FR-A-2 623 622 (IZOARD)<br>* Page 6, ligne 28 - page 9, ligne 11; page 11, lignes 4-14; page 11, ligne 37 - page 12, ligne 5; fig. * | 3,4,8- 10 | |
| A | FR-A-2 133 224 (SOC. NOUVELLE DE METALLISATION)<br>* En entier * | 16 | |

DOMAINES TECHNIQUES RECHERCHES (Int. Cl.5)

G 01 K 11
B 05 C 3

Le présent rapport a été établi pour toutes les revendications

| Lieu de la recherche | Date d'achèvement de la recherche | Examinateur |
|---|---|---|
| LA HAYE | 20-07-1991 | RAMBOER P. |